# EUROPÄISCHE PATENTANMELDUNG

(11) **EP 0 987 482 A2**
(43) Veröffentlichungstag der Anmeldung: **22.03.2000**
(21) Anmeldenummer: 99116301.5
(22) Anmeldetag: 18.08.1999
(51) Int. Cl.: F16L 5/10, F16L 5/08

(54) **Hauseinführung für Rohre**

(30) Priorität: 14.09.1998 DE 29816456 U; 14.09.1998 DE 29816473 U
(71) Anmelder: Kröner GmbH Armaturen und Dichtungstechnik, 73269 Hochdorf/Ploch. (DE)
(72) Erfinder: Kröner, Alfred, 73269 Hochdorf (DE)
(74) Vertreter: König, Beate, Dipl.-Phys. Dr.

(57) **Zusammenfassung**

Eine erfindungsgemäße Hauseinführung für Rohre umfaßt somit ein metallenes Hülsrohr (8) und eine Ausziehsicherung (16), wobei das Hülsrohr am Innenende als Ausziehsicherung einen Flansch aufweist. Durch die metallene Ausführung des Hülsrohrs mit Flansch ergibt sich eine einstückige Ausführung der Ausziehsicherung, die zugleich sehr raumsparend ausgeführt ist im Vergleich zu herkömmlichen Ausziehsicherungen mit Festhaltekappen und dergleichen.

Am Außenende des Hülsrohrs (8) kann ein Dichtungsstopfen (50) aus elastischem Material sitzen. Dieser hat vorzugsweise auf der Außenseite flexible Ringstege (60) derart, daß sich diese beim Einbau dichtend umlegen. Sind die Abstände zumindest zweier benachbarter Ringstege so gewählt, daß sich diese in Kontakt mit dem anderen jeweils umlegen, ergibt sich eine außerordentlich sichere Abdichtung. Weiter kann dann der Dichtungsstopfen aus steiferem Material hergestellt werden, was wiederum einen festeren Sitz ermöglicht.

## Beschreibung

Die Erfindung betrifft eine Hauseinführung für Rohre, umfassend ein Hülsrohr und eine Ausziehsicherung, insbesondere auch einen Dichtungsstopfen aus elastischem Material, der auf dem Außenende des Hülsrohrs sitzt.

Hauseinführungen dienen dazu, Gas- und Wasserzuleitungen aus Kunststoff durch ein Schutz- oder Hülsrohr aus Metall in ein Gebäude zu führen. An Hauseinführungen wird eine Anzahl von Bedingungen gestellt wie Dichtheit, Korrosionsschutz, Verdrehsicherung. Es können Ausziehsicherungen vorgesehen sein, um von außen wirkende Zugkräfte auf hierfür ausreichend tragfähige Gebäudeteile abzuleiten.

Aus der DD 268 041 A1 ist eine Mauerdurchführung mit einem im Abstand von der Mauer angeordneten Abdrückflansch und einem außerhalb von diesem angebrachten Anschlußflansch vorgesehen, die beide auf der Rohrleitung verschweißt werden. Mittels der beiden Flansche wird eine Stopfdichtung verpreßt.

Die DE-GM 71 37 377 betrifft ein Schutzrohr zur Durchführung von Kabeln, Rohren und dergleichen. Zu Abdichtungszwecken ist ein Dichtelement mit Lippen vorgesehen, das beispielsweise auf seiner ganzen Länge außen und innen mit Ringrippen versehen ist. Dabei ergeben die Außenrippen eine wellenförmige und die Innenrippen eine sägezahnförmige Mantellinie. Weiter kann am freien Ende ein Flansch vorgesehen sein, der im Mauerwerk aufgenommen werden kann. Bei zusätzlicher Verwendung einer Ringscheibe wird die Dichthaut zwischen dem Flansch und der Ringscheibe festgeklemmt, wodurch sich eine gute Befestigung und gute Abdichtung ergeben.

Bei einer Mauerdurchführung für Hauseinführungen gemäß DE 34 11 642 C2 ist eine Stützplatte vorgesehen, die beispielsweise durch Schweißung einstückig mit einem Schutzrohr verbunden ist. Durch einen Füllstutzen an der Stützplatte wird Füllmasse, beispielsweise Mörtel oder Zement, in den Ringraum zwischen der Mauer und dem Schutzrohr bis zur Stützplatte eingefüllt, die den Füllraum begrenzt.

Dichtungsstopfen aus elastischem Material dienen beispielsweise zum Abdichten des Raums zwischen einem einen Mauerdurchbruch auskleidenden äußeren Rohr und einem die Mauer durchdringenden Innenrohr, d.h. als Ringraumabdichtung. Üblicherweise sind derartige Dichtungsstopfen auf der Außen- und häufig auch auf der Innenseite mit Rippen versehen, um eine ausreichende Dichtung sicherzustellen.

Ein aus der DE 18 66 538 U bekannter Dichtungsstopfen ist auf der Außenseite mit sägezahnförmigen Rippen versehen, deren Schräge und Steifigkeit derart gewählt sind, daß bei einer Auslenkung der Rippen die Stopfenwand unter Bildung von Wülsten an der Innenfläche verformt wird. Beim Einführen des Dichtungsstopfens in den Wanddurchbruch werden die Außenrippen dann aus ihrer gestreckten Stellung ausgelenkt. Dabei ist vorgesehen, daß beim Aufschieben des Dichtungsstopfens nur ein geringer Reibschluß besteht.

In der DD-PS 43872 ist eine Dichtung für Wanddurchführungen beschrieben, die auf der Außen- und Innenseite eine Anzahl von ringförmigen Dichtungsrippen aufweist. Der Aufbau und die Anordnung der Rippen sind dabei derart, daß diese sich dichtend an die abzudichtende Wand anlegen.

Ein anderer Dichtungsstopfen gemäß der DE 29 00 805 C weist auf der Außenseite Sägezahnrippen auf, deren in Einschubrichtung hintere Flanken radial gerichtet sind. Den Sägezahnrippen zugeordnet sind auf der Innenseite Rippen. Im Fall eines Hin- und Herziehens des Dichtungsstopfens kann es jedoch auftreten, daß die Sägezahnrippen in der einen oder anderen Richtung umklappen, so daß sich auf der jeweils anderen Seite ein Spalt ergibt und die Dichtwirkung nicht ausreichend ist. Eine weitere Ursache hierfür ist eine verhältnismäßig weiches Stopfenmaterial.

Der Erfindung liegt die Aufgabe zugrunde, eine Hauseinführung mit Ausziehsicherung zu schaffen, die einfach aufgebaut und montagefreundlich ist. Ferner soll ein sicherer Dichtungsabschluß für Hauseinführungen gewährleistet werden.

Diese Aufgabe ist erfindungsgemäß bei einer Hauseinführung mit den Merkmalen des Anspruchs 1, ferner bei einem Dichtungsstopfen mit den Merkmalen des Anspruchs 14 gelöst. Vorteilhafte Weiterbildungen der erfindungsgemäßen Hauseinführung sind Gegenstand der Unteransprüche.

Eine erfindungsgemäße Hauseinführung für Rohre umfaßt somit ein metallenes Hülsrohr und eine Ausziehsicherung, wobei das Hülsrohr am Innenende als Ausziehsicherung einen Flansch aufweist.

Durch die metallene Ausführung des Hülsrohrs mit Flansch ergibt sich eine einstückige Ausführung der Ausziehsicherung, die zugleich sehr raumsparend ausgeführt ist im Vergleich zu herkömmlichen Ausziehsicherungen mit Festhaltekappen und dergleichen.

Sehr vorteilhaft ist eine glasperlen-gestrahlte Ausführung des Hülsrohrs. Mittels der so geschaffenen Aufrauhung kann eine sehr gute Haftung im Mauerwerk gewährleistet werden.

Zweckmäßig ist der Flansch mit Laschen mit zumindest einem Langloch versehen. Dies ermöglicht eine einfache und zuverlässige Halterung der Ausziehsicherung am Mauerwerk, indem einfach angedübelt wird.

Sehr vorteilhaft ist eine Ausführung des Flansches mit einem Einfülloch, durch das Mörtel oder PU-Schaum in den Mauerhohlraum eingefüllt werden können.

Bei einem vorteilhaften Ausführungsbeispiel der erfindungsgemäßen Hauseinführung ist weiter ein Gummistützring mit Lippendichtung vorgesehen. Dieser dient als Abschluß am Gebäudeäußeren im Kernbohrloch und gewährleistet, daß beim Einfüllen mit Mörtel oder beim Ausschäumen des Hohlraumes auf einfache Weise ein flexibler Verschluß gewährt ist.

Vorzugsweise ist das Außenende des Hülsrohrs aufgeweitet. Dies verhindert, daß beispielsweise ein eingeführtes Wasserrohr beschädigt wird, und ermöglicht eine flexiblere Leitungsanordnung in dem Fall, in dem der Boden, beispielsweise durch Temperatureinflüsse, arbeitet oder auf sonstige Weise Kräfte von außen angreifen.

Aus Gründen der Korrosionsfestigkeit ist das Hülsrohr vorzugsweise aus Edelstahl ausgeführt.

Als besonders vorteilhaft hat sich eine Ausführung einer Hauseinführung erwiesen, bei der ein flexibler Spiral- oder Wellschlauch mittels eines Übergangsstücks fest am Außenende des Hülsrohrs angebracht ist. Derartige flexible Hauseinführungen von Gas- oder Wasserrohren werden in Gebäuden oder Kellern oder auch bei Industriegebäuden eingesetzt, und zwar haben sich zwei Ausführungsformen herausgebildet.

Gemäß der ersten Lösung wird ein Übergangsstück aus Edelstahl am Außenende des Hülsrohrs angebracht und daran ein flexibles Wellrohr aus Edelstahl in beliebiger Länge, z.B. 1,5 bis 50 m, angeschweißt. Die Länge kann auch bauseits an der Baustelle beliebig gekürzt werden. Für den äußeren Endverschluß zwischen Wellrohr und dem durchgeführten Versorgungsrohr wird ein Gummistopfen verwendet.

Die zweite Lösung besteht im Anschluß eines hochflexiblen Spiralschlauchs aus Kunststoff, der extra stabil, betonfest sowie universell biegbar ist und eine eingebaute Hart-PVC (Polyvinylchlorid)-Spirale aufweist. Der Spiralschlauch wird etwa 100 mm auf das Hülsrohr aufgeschoben und mit diesem dann mittels eines zweckmäßig dickwandigen Schrumpfschlauchs mit Innenkleber verbunden.

Bei einem anderen vorteilhaften Ausführungsbeispiel der erfindungsgemäßen Hauseinführung ist das Hülsrohr mit einer vorzugsweise angeschweißten Gewindehülse am Innenende versehen. Diese dient zum Eindrehen eines Anschlußstutzens, der so einfach montiert werden kann. Das Innenende einer solchen Gewindehülse trägt dann zweckmäßig angeschweißt den Flansch.

Vorteilhaft kann die Hauseinführung auf dem Innenende des Hülsrohrs eine Preßringdichtung mit je einer Außen- und Innenscheibe und einem zwischen den Scheiben eingespannten Ring aus elastisch verformbarem Material aufweisen, wobei der Flansch die Außenscheibe bildet. Bei dieser Variante der Trocken-Hauseinführung für Wasser oder Gas können Abmessungsdifferenzen durch die auf diese Weise eingebaute Preßringdichtung ausgeglichen werden, wobei die Preßringdichtung ein Verspannen der Hauseinführung im Mauerdurchbruch ermöglicht. Vorzugsweise ist die Preßringdichtung derart ausgeführt, daß die Innenscheibe mit Gewinde für einen Schraubeingriff mit den Schraubbolzen versehen ist, wodurch auf separate Gegenmuttern für die Bolzenfixierung verzichtet werden kann. Weiter kann in diesem Fall der Sitz der Schraubbolzen auf einfache Weise von der zugänglichen Dichtungsaußenseite her nachgespannt werden, was für die Praxis sehr wichtig ist.

Am Außenende des Hülsrohrs kann ein Dichtungsstopfen aus elastischem Material sitzen. Dieser hat vorzugsweise auf der Außenseite flexible Ringstege derart, daß sich diese beim Einbau dichtend umlegen. Sind die Abstände zumindest zweier benachbarter Ringstege so gewählt, daß sich diese in Kontakt mit dem anderen jeweils umlegen, ergibt sich eine außerordentlich sichere Abdichtung. Weiter kann dann der Dichtungsstopfen aus steiferem Material hergestellt werden, was wiederum einen festeren Sitz ermöglicht.

Im einzelnen, ein erfindungsgemäßer Dichtungsstopfen aus elastischem Material umfaßt einen Ringkörper mit flexiblen Ringstegen auf der Außenseite, deren Höhe und Dicke so bemessen sind, daß sich die Ringstege beim Einbau dichtend umlegen. Weiter weist der Ringkörper auf der Innenseite Ringwülste auf. Zumindest zwei benachbarte Ringstege sind so bemessen und angeordnet, daß sich der Ringsteg beim Einbau im wesentlichen in Kontakt mit dem anderen umlegt.

Die erfindungsgemäße Konzeption zumindest zwei sehr dicht beieinander befindlicher bzw. entsprechend ausgelegter Ringstege bewirkt, daß keine Undichtigkeiten entstehen können. Dies ermöglicht es wiederum, daß der Dichtungsstopfen selbst aus steiferem Material hergestellt werden kann, was wiederum einen festeren Sitz ermöglicht.

Einsatzbereiche für den erfindungsgemäßen Dichtungsstopfen sind Abschlüsse für Kernbohröffnungen in Häusern, Kabelschutzrohre, Futterrohre, Vortriebsrohre, etc.

Der erfindungsgemäße Dichtungsstopfen kann so ausgebildet werden, daß die Ringwülste oder Ringstege an ihren Außenenden rund sind.

Zur Erhöhung der Dichtwirkung kann vorgesehen sein, daß an dem in axialer Richtung äußeren Ende des Dichtungsstopfens ein Innenflansch vorgesehen ist. Dieser bildet dann den Abschluß zu dem durchzuführenden Rohr.

Eine bevorzugte Ausführungsform des erfindungsgemäßen Dichtungsstopfens zeichnet sich dadurch aus, daß die Höhe der Ringstege von dem in axialer Richtung äußeren Ende nach innen abnimmt. Diese Maßnahme vereinfacht das Eindringen, denn an dem inneren Ende sind die Steghöhen geringer. Mit zunehmendem Vortrieb muß allerdings mehr Druck aufgewendet werden, was einen festeren bzw. strammen Sitz des erfindungsgemäßen Dichtungsstopfens gewährleistet.

Vorteilhaft können die Zwischenräume zwischen den Ringstegen geringer als ihre Dicke und/oder Höhe sein. Damit ist auch für den Fall eines eventuellen Verschiebens des Dichtungsstopfens die Dichtigkeit gewährleistet, da sich die Ringstege dann fast sich aufeinander umlegen.

Ein sehr zweckmäßiges Material des Dichtungsstopfens ist Gummi. Dies ist einerseits ausreichend steif und ermöglicht andererseits eine genügende Flexibilität für die Ringwülste und Ringstege.

Alternativ zu einem Dichtungsstopfen kann auch auf dem Außenende des Hülsrohrs eine Preßringdichtung mit je einer Außen- und Innenscheibe und einem zwischen den Scheiben eingespannten Ring aus elastisch verformbarem Material sitzen, wobei der Flansch die Außenseite bildet. Die Ausführung dieser zweiten Preßringdichtung kann ebenso wie bei der inneren Preßringdichtung sein, wobei sich gleiche Vorteile ergeben.

Insbesondere im Falle von Kernbohröffnungen kann zweckmäßig eine Hauseinführung eingesetzt werden, die über einem bereits in ein Schutzrohr eingeschobenes Versorgungsrohr montiert wird. Diese Ausführung hat zwei Preßringdichtungen, die in einem Abstand entsprechend der Mauerstärke in der Lage fixiert sind. Zur Fixierung werden vorzugseise Distanzrohre eingesetzt, zweckmäßig Gewindestangen, die dann bedarfweise gekürzt werden. Für ein Festlegen der Beabstandung der Preßringdichtung können die Distanzrohre mit Hülsen versehen sein, was auch ein sichereres Verspannen der Preßringdichtungen unter Druck ermöglicht. Durch den Gewindeeingriff können die beiden Preßringdichtungen dann vom Gebäudeinneren aus verspannt werden.

Die erfindungsgemäße Hauseinführung, insbesondere in der Ausführung mit Preßringdichtungen, hat den Vorteil einer guten Nachstellbarkeit. Sie ist leicht demontierbar und sehr dauerhaft. Zweckmäßig ist sie aus wiederverwendbaren Materialien aufgebaut.

Die Erfindung wird im folgenden weiter anhand mehrerer Ausführungsbeispiele und der Zeichnung beschrieben. Diese Darstellungen, ebenso wie auch die Zusammenfassung von Merkmalen in den Unteransprüchen, sollen die Erfindung keinesfalls einschränken. In der Zeichnung zeigen:
- Fig. 1: eine Teilschnittansicht eines ersten Ausführungsbeispiels einer erfindungsgemäßen Hauseinführung,
- Fig. 2: eine Draufsicht eines mit Laschen versehenen, bei dem Ausführungsbeispiel von Fig. 1 als Ausziehsicherung verwendeten Flansches,
- Fig. 3: eine Teilschnittansicht eines zweiten Ausführungsbeispiels einer erfindungsgemäßen Hauseinführung,
- Fig. 4a und Fig. 4b: eine Draufsicht und Schnittansicht eines mit Laschen versehenen, als Ausziehsicherung verwendeten Flansches des Ausführungsbeispiels von Fig. 3,
- Fig. 5a und Fig. 5b: eine Draufsicht und Längsschnittansicht eines bei einer Preßringdichtung des Ausführungsbeispiels von Fig. 3 verwendeten Rings aus elastisch verformbarem Material,
- Fig. 6a und Fig. 6b: eine Draufsicht und Schnittansicht einer Innenscheibe einer bei dem Ausführungsbeispiel von Fig. 3 verwendeten Preßringdichtung,
- Fig. 7: eine Draufsicht eines bei dem Ausführungsbeispiel von Fig. 3 verwendeten Dichtungsstopfens in der Einbauposition,
- Fig. 8: eine Draufsicht auf ein weiteres Ausführungsbeispiel eines in Längsrichtung axial aufgeschnittenen Dichtungsstopfens,
- Fig. 9: eine Ansicht des Dichtungsstopfens von Fig. 8, in Fig. 8 von links gesehen,
- Fig. 10: eine Teilschnittansicht eines dritten Ausführungsbeispiels einer erfindungsgemäßen Hauseinführung,
- Fig. 11: eine Teilschnittansicht eines vierten Ausführungsbeispiels einer erfindungsgemäßen Hauseinführung,
- Fig. 12: eine Teilschnittansicht eines fünften Ausführungsbeispiels einer erfindungsgemäßen Hauseinführung,
- Fig. 13: eine Teilschnittansicht eines sechsten Ausführungsbeispiels einer erfindungsgemäßen Hauseinführung und
- Fig. 14: eine Teilschnittansicht eines siebten Ausführungsbeispiels einer erfindungsgemäßen Hauseinführung.

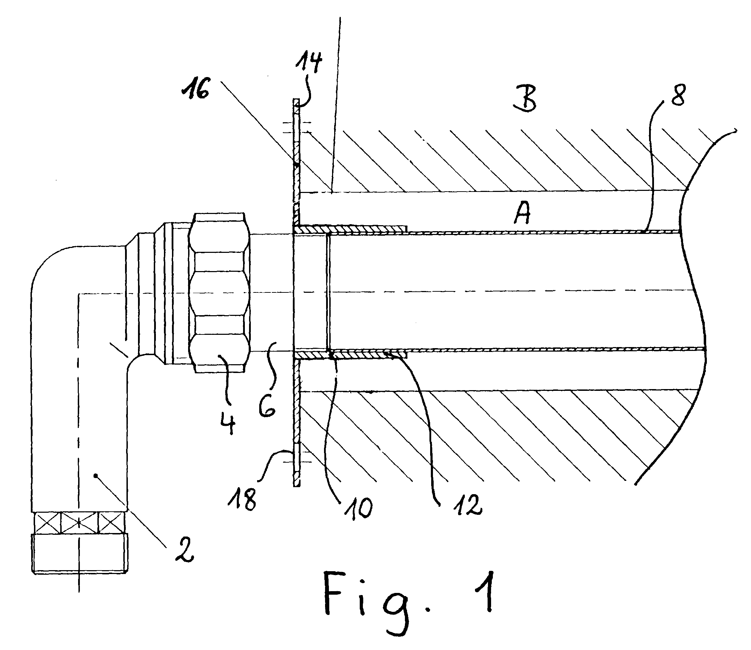

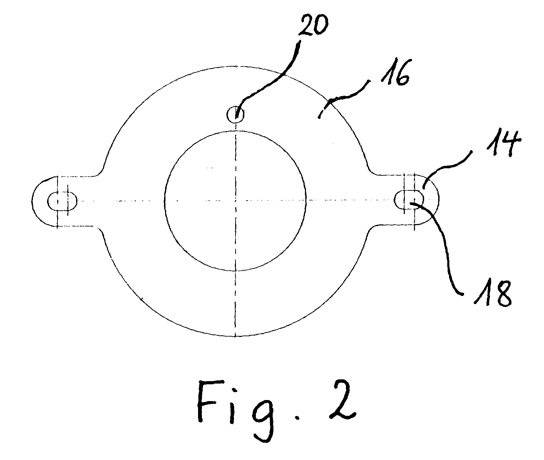

Es wird als erstes anhand von Fig. 1 und 2 ein erstes Ausführungsbeispiel einer erfindungsgemäßen Hauseinführung beschrieben. Diese ist vorgesehen für einen Anschluß an ein Anschlußstück 2, hier einen Winkelanschlußstutzen, für ein Hülsrohr. Für eine Verbindung mit dem Anschlußstück 2 ist die Hauseinführung am Innenende mit einer Überwurfmutter 4 und einem Stutzen 6 versehen, der fest mit dem Hülsrohr 8 aus Edelstahl verbunden ist. Zur Abdichtung ist ein Dichtring 10 vorgesehen. Der vordere Bereich des Hülsrohrs 8 sowie der Anschlußbereich des Stutzens 6 sind von einer aufgeschweißten Gewindehülse 12 um-geben. Im gezeigten Ausführungsbeispiel ist der Stutzen 6 in die Gewindehülse 12 eingeschraubt. Am vorderen Ende der Gewindehülse 12 ist ein mit Laschen 14 versehener Flansch 16 aufgeschweißt. Die Laschen 14, von denen eine in Fig. 2 im einzelnen dargestellt ist, sind jeweils mit einem Langloch 18 versehen. Aus der Darstellung von Fig. 2 ist weiter ein Einfülloch 20 ersichtlich.

Wie Fig. 1 zeigt, ist die Hauseinführung für den Einsatz in einer Öffnung A in einer Mauer B vorgesehen. Mittels der mit Langlöchern 18 versehenen Flanschlaschen 14 kann die Hauseinführung an der betreffenden Mauer B eingedübelt werden, wodurch sich eine zuverlässige Ausziehsicherung ergibt. Durch die Hauseinführung bzw. deren Hülsrohr 8 sind dann die üblicherweise aus Kunststoff bestehenden Versorgungsrohre eingeführt und an den Anschluß 2 werden dann die hausinneren Metallrohre angeschlossen. Zur Fixierung und Isolierung der Hauseinführung im Mauerdurchbruch dienen dabei im Bereich der Öffnung A durch das Einfülloch eingeführter Mörtel oder PU-Schaum.

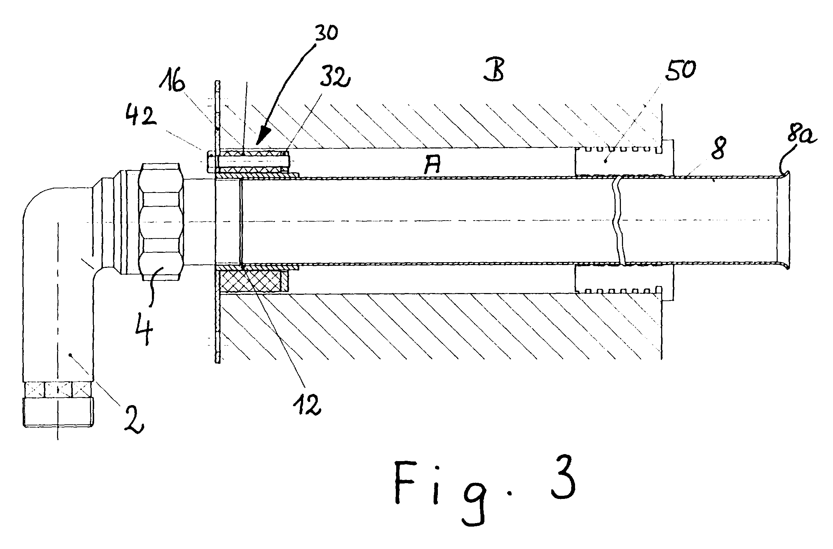

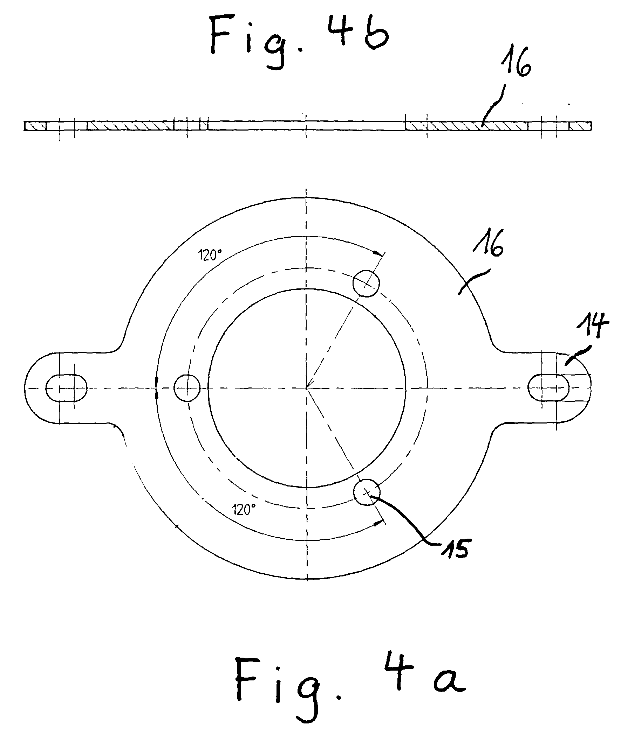

Ein zweites Ausführungsbeispiel der erfindungsgemäßen Hauseinführung ist in Fig. 3 veranschaulicht, wobei Fig. 4, 5, 6 und 7 weitere Einzelheiten bzw. Einzelteile zeigen. Soweit die Teile des zweiten Ausführungsbeispiels gleich denen des ersten Ausführungsbeispiels sind, sind sie mit denselben Bezugszeichen bezeichnet und werden nicht erneut beschrieben.

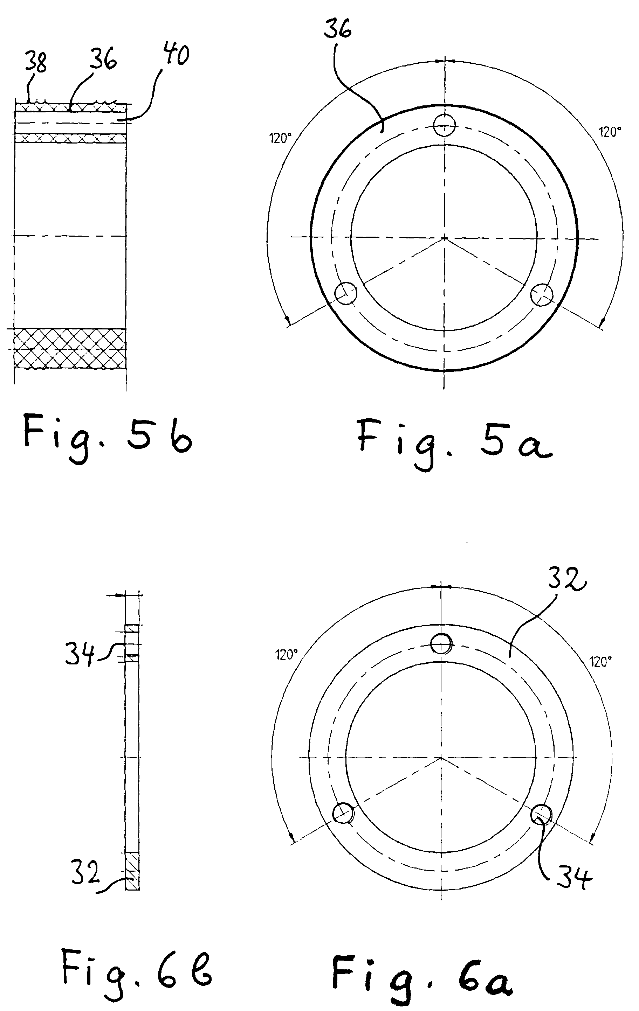

Bei diesem Ausführungsbeispiel ist auf dem Innenende des Hülsrohrs 8 eine Preßringdichtung 30 angeordnet, deren Aufbau mehr im einzelnen aus Fig. 4, 5 und 6 ersichtlich ist. Grundsätzlich kann es sich bei dieser Preßringdichtung um eine herkömmliche Preßringdichtung handeln. Vorzugsweise hat sie den nachfolgend beschriebenen Aufbau. Die Funktion der Außenscheibe hat bei dem Ausführungsbeispiel von Fig. 3 der zugleich als Ausziehsicherung vorgesehene Flansch 16. Die Innenscheibe 32 (vgl. Fig. 6) weist eine größere Dicke auf und ihre Bohrungen 34 sind mit Innengewinde versehen. Zwischen der Außen- und Innenscheibe 16, 32 der Preßringdichtung 30 befindet sich der in Fig. 5 gezeigte Ring 36 aus elastisch verformbarem Material. Auf seiner Außenseite sind kleine Ringwülste 38 zur Verbesserung des Haftens am Mauerwerk, d.h. der Mauer B, vorgesehen. Infolge der in den Bohrungen 34 vorgesehenen Innengewinde ist es möglich, bei den mit Kopf versehenen Schraubbolzen 40 auf entsprechende Gegenmuttern auf der Innenscheibe 32 zu verzichten. Daher kann die Preßringdichtung von außen, d.h. in diesem Fall vom Gebäudeinneren her, nachgespannt werden. Im gezeigten Ausführungsbeispiel weisen die Außen- und Innenscheibe 16, 32 und entsprechend der Ring 36 jeweils drei im Abstand von 120° angeordnete Löcher 40 bzw. Bohrungen 15, 34 auf.

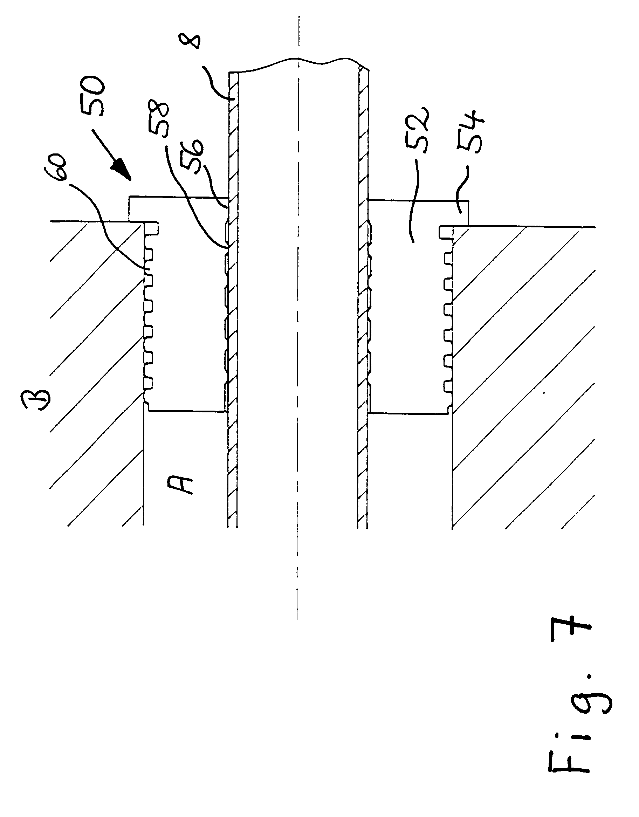

Wie Fig. 3 zeigt, weist das Hülsrohr 8 am Außenende eine Aufweitung 8a auf, die es vereinfacht, Bewegungen des sich hindurch erstreckenden Versorgungsrohrs auszugleichen, beispielsweise aufgrund von Bodenbewegungen oder dergleichen. Das Hülsrohr 8 ist am Außenende der Mauer B mittels eines Dichtungsstopfens 50 abgedichtet bzw. im Mauerwerk fixiert, der in der vergrößerten Teilschnittansicht von Fig. 7 mehr im einzelnen gezeigt ist. Der Dichtungsstopfen 50 ist aus elastischem Material, vorzugsweise Gummi, und umfaßt einen Ringkörper 52 mit einem Außenflansch 54, gegenüber von dem sich auf der Innenseite ein Innenflansch 56 befindet. Auf der Innenseite sind in gleichbleibenden Abständen Ringwülste 58 angeordnet. Auf der Außenseite weist der Dichtungsstopfen 50 flexible Ringstege 60 auf, deren Höhe vorzugsweise von links nach rechts zunimmt, was jedoch in Fig. 7 nicht dargestellt ist. Aufgrund ihrer Breite und Höhe sind die Ringstege 60 verhältnismäßig stabil. Andererseits haben sie durch ihre verhältnismäßig große Höhe, die bei der erwähnten, nicht dargestellten Ausführung von außen her zunimmt, eine ausreichende Flexibilität, die das Umklappen und die Dichtwirkung ermöglicht und verbessert. Durch eine verhältnismäßig enge Anordnung der Ringstege können sich diese bei erhöhtem Druck aufeinander, jedenfalls zueinander hin umlegen.

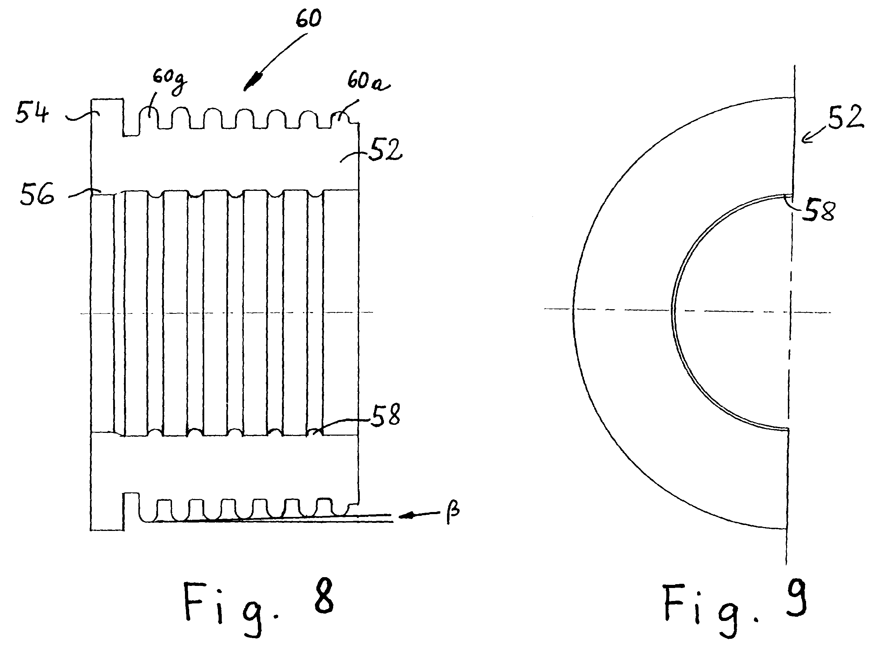

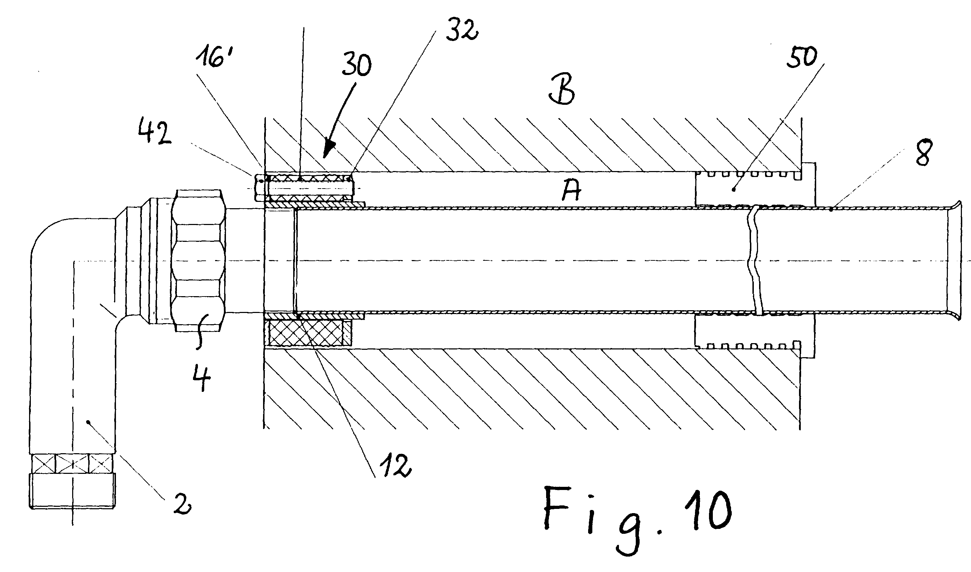

Fig. 8 und 9 zeigen ein zweites Ausführungsbeispiel eines Dichtungsstopfens. Auf der Außenseite weist der Dichtungsstopfen flexible Ringstege 60 auf, deren Höhe in Fig. 8 von rechts nach links zunimmt. Die sich daraus ergebende Steigung ist in Fig. 8 durch den eingezeichneten Winkel β veranschaulicht. Bei diesem Ausführungsbeispiel beträgt der Winkel β etwa 1 bis 2 Grad. Es sind jedoch auch andere Winkelwerte möglich, wobei die Stegabmessungen und das Stopfenmaterial diese mit bestimmen. Im veranschaulichten Anführungsbeispiel ist bei einem Stopfendurchmesser von rund 110 mm und einem Innendurchmesser von rund 60 mm die Wulsthöhe innen etwa 2 mm. Die Höhe der Ringstege nimmt nach außen von etwa 4 mm (60a) auf etwa 7 mm (60g) zu, wobei die Ringstege etwa in einem Abstand von 8 mm angeordnet sind und eine Stegbreite von etwa 4,5 mm aufweisen. Damit sind die Ringstege wie bei dem ersten Ausführungsbeispiel einerseits aufgrund ihrer Breite bereits verhältnismäßig stabil und haben andererseits durch ihre verhältnismäßig große Höhe, die nach außen hin zunimmt, eine ausreichende Flexibilität, die das Umklappen ermöglicht. Durch die verhältnismäßig enge Anordnung der Ringstege können sich diese aufeinander oder jedenfalls zueinander hin umlegen, wodurch die Dichtungswirkung erhöht ist. Die Dichtungsstege tragen demgemäß in Kombination zur Dichtungswirkung und zum festen Sitz des Dichtungsstopfens bei.

Das in Fig. 10 gezeigte dritte Ausführungsbeispiel einer erfindungsgemäßen Hauseinführung unterscheidet sich von dem zweiten Ausführungsbeispiel von Fig. 2 in der Ausbildung der Außenscheibe 16' der Preßringdichtung 30. Diese weist bei den dritten Ausführungsbeispiel der Erfindung keine Laschen 14 auf.

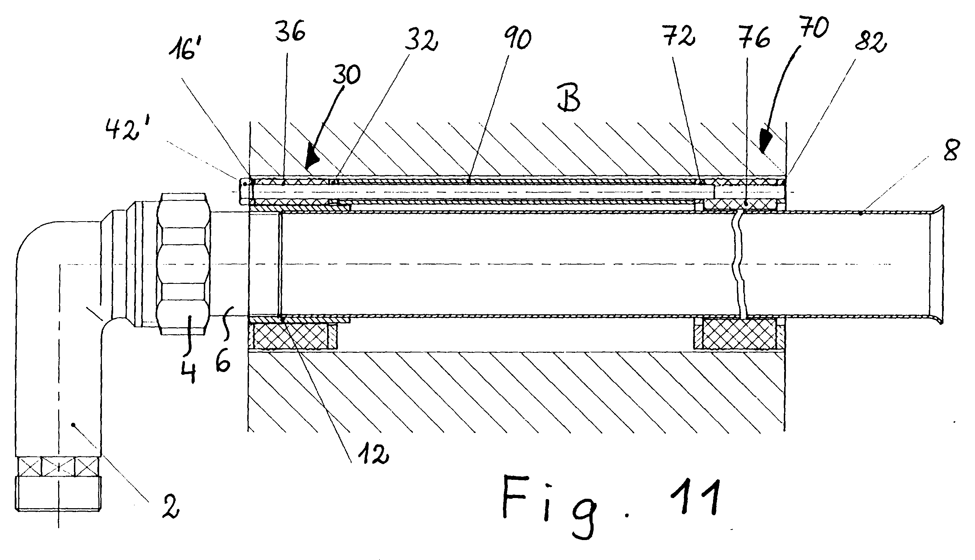

Entsprechend ist auch das in Fig. 11 dargestellte vierte Ausführungsbeispiel einer erfindungsgemäßen Hauseinführung mit einer Preßringdichtung 30 auf der Innenseite ausgestattet. Statt des Dichtungsstopfens 50 des dritten Ausführungsbeispiels weist die Hauseinführung gemäß viertem Ausführungsbeispiel eine zweite Preßringdichtung 70 mit Außen- und Innenscheiben 82, 72 sowie elastischem Ring 76 aus Gummi auf. Als Schraubbolzen dient eine mit Kopf versehene Gewindestange 42', die jeweils in die mit Innengewinde versehenen Bohrungen der Innenscheiben 32 und 72 eingreift. Die Gewindestange 42' ist von einer Hülse 90 umgeben, deren Länge den Abstand der Innenscheiben 32, 72 voneinander festlegt. Diese Konstruktion ermöglicht es, von der Hausinnenseite her mit einem Arbeitsgang beide Preßringdichtungen zugleich in der Mauer B zu verspannen.

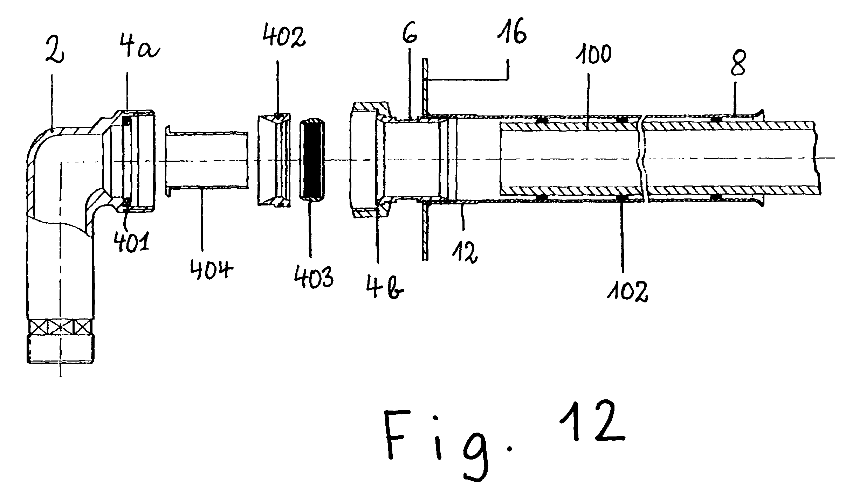

Die Darstellung eines fünften Ausführungsbeispiels einer erfindungsgemäßen Hauseinführung in Fig. 12 zeigt insbesondere den Aufbau im Bereich der an einem Anschlußstück bzw. Stutzen 6 sitzenden Überwurfmutter 4, die aus Messing oder Edelstahl ist. Die zweiteilig ausgebildete Überwurfmutter 4a, 4b umfaßt einen O-Ring 401, ein mit O-Ring versehenes Einlegeteil 402, einen Klemmring 403 und eine Einsteckhülse 404. Mit dem Stutzen 6 ist eine Gewindehülse 12 verschraubt und an dieser ein Flansch 16 angeschweißt. Ein Hülsrohr 8 aus VA-Stahl ist mit der Gewindehülse 12 verschweißt. Im Hülsrohr 8 sitzt ein Mediumrohr 100 aus beispielsweise PE (Polyethylen). Rollringe 102 unterstützen die Einführung und den Sitz des Mediumrohrs 100 im Hülsrohr 8, dessen vorderes Ende durch die Einsteckhülse 404 abgestützt wird.

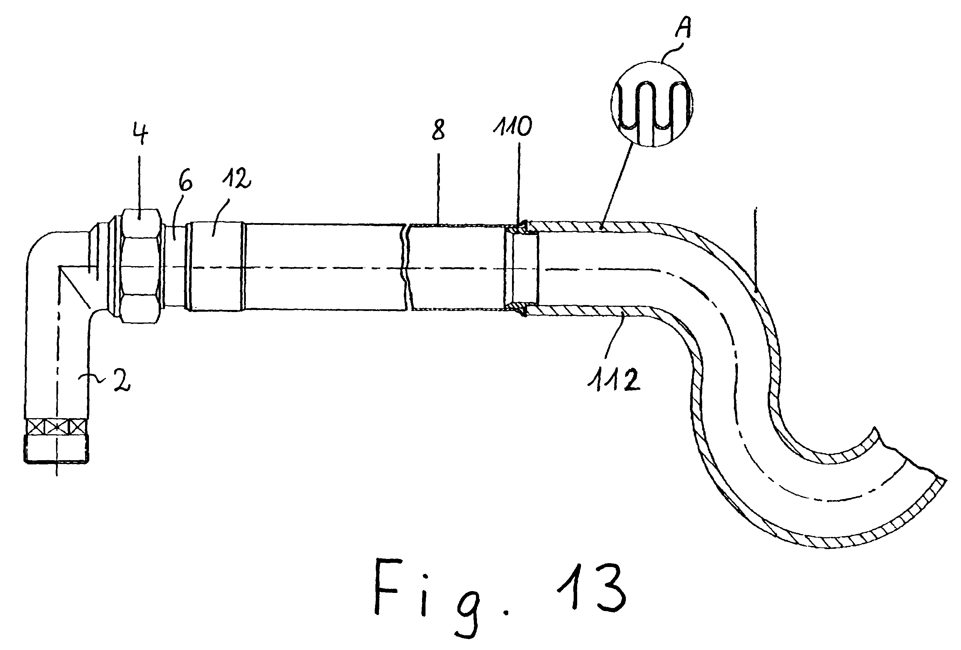

Der Aufbau der Hauseinführung gemäß einem in Fig. 13 veranschaulichten Ausführungsbeispiel unterscheidet sich im wesentlichen durch einen individuellen flexiblen Anschluß von den vorhergehend beschriebenen Ausführungsbeispielen. Es werden daher die bereits dargestellten und mit denselben Bezugszeichen versehenen Teile nicht erneut beschrieben. Im vorderen Ende des darauf aufgeschweißten Hülsrohrs 8 sitzt ein Verbindungs- bzw. Übergangsstück 110 aus Edelstahl, mittels dessen ein flexibles Wellrohr 112 aus Edelstahl angeschweißt ist. Die Gestalt des Wellrohrs ist im vergrößerten Ausschnitt A verdeutlicht. Aufgrund der Wellung ist das Wellrohr 112 sehr biegsam.

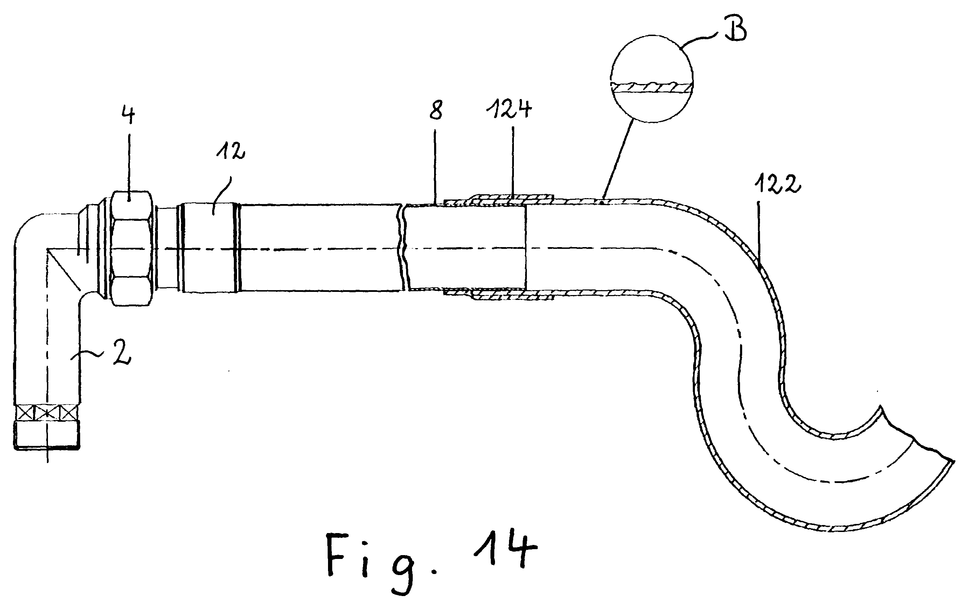

Alternativ umfaßt das Ausführungsbeispiel von Fig. 14 statt des Edelstahl-Wellrohrs 112 einen hochflexiblen Kunststoff-Spiralschlauch 122. Dieser ist etwa 100 mm auf das Hülsrohr 8 aufgeschoben und mittels eines dickwandigen Schrumpfschlauchs 124 mit Innenkleber fixiert. Die Gestalt des Spiralschlauchs zeigt der vergrößerte Ausschnitt B. Im Kunststoff-Spiralschlauch ist eine Hart-PVC (Polyvinylchlorid)-Spirale eingebaut. Innen ist der Schlauch glatt.

## Patentansprüche

1. Hauseinführung für Rohre, umfassend ein metallenes Hülsrohr (8) und eine Ausziehsicherung (16, 16', 82), dadurch **gekennzeichnet,** daß das Hülsrohr am Innenende als Ausziehsicherung einen Flansch (16, 16', 82) aufweist.

2. Hauseinführung nach Anspruch 1, dadurch **gekennzeichnet,** daß der Flansch (16) mit Laschen (14) mit zumindest einem Langloch (18) versehen ist.

3. Hauseinführung nach Anspruch 1 oder 2, dadurch **gekennzeichnet,** daß der Flansch (16) mit einem Einfülloch (20) versehen ist.

4. Hauseinführung nach einem der Ansprüche 1 bis 3, dadurch **gekennzeichnet,** daß ein Gummmistützring mit Lippendichtung vorgesehen ist.

5. Hauseinführung nach einem der Ansprüche 1 bis 4, dadurch **gekennzeichnet,** daß das Hülsrohr (8) mit einer Gewindehülse (6) am Innenende und/oder mit einer Aufweitung (8a) am Außenende versehen ist.

6. Hauseinführung nach einem der Ansprüche 1 bis 5, dadurch **gekennzeichnet,** daß das Hülsrohr (8) aus Edelstahl ist.

7. Hauseinführung, insbesondere nach einem der Ansprüche 1 bis 6, dadurch **gekennzeichnet,** daß ein flexibler Spiral- oder Wellschlauch (122, 122) mittels eines Übergangsstücks (110, 124) fest am Außenende des Hülsrohrs angebracht ist.

8. Hauseinführung nach einem der Ansprüche 1 bis 7, dadurch **gekennzeichnet,** daß auf dem Innenende des Hülsrohrs (8) eine Preßringdichtung (30) mit je einer Außen- und Innenscheibe (16', 32) und einem zwischen den Scheiben eingespannten Ring (36) aus elastisch verformbarem Material sitzt, wobei der Flansch (16') die Außenscheibe bildet.

9. Hauseinführung nach einem der Ansprüche 1 bis 8, dadurch **gekennzeichnet,** daß auf dem Außenende des Hülsrohrs (8) ein Dichtungsstopfen (50) aus elastischem Material mit flexiblen Ringstegen (60) auf der Außenseite sitzt, die sich beim Einbau dichtend umlegen.

10. Hauseinführung nach einem der Ansprüche 1 bis 9, dadurch **gekennzeichnet,** daß auf dem Außenende des Hülsrohrs (8) eine Preßringdichtung (70) mit je einer Außen- und Innenscheibe (82, 72) und einem zwischen den Scheiben eingespannten Ring (76) aus elastisch verformbarem Material sitzt, wobei der Flansch (82) die Außenscheibe bildet.

11. Hauseinführung nach Anspruch 8 und 10, dadurch **gekennzeichnet,** daß die beiden Preßringdichtungen (30, 70) in einem Abstand entsprechend der Mauerstärke fixiert sind.

12. Hauseinführung nach Anspruch 11, dadurch **gekennzeichnet,** daß der Abstand durch Distanzrohre (42') festgelegt ist.

13. Hauseinführung nach Anspruch 11 oder 12, dadurch **gekennzeichnet,** daß als Distanzrohre Gewindestangen (42') vorgesehen sind.

14. Hauseinführung nach Anspruch 13, dadurch **gekennzeichnet,** daß die Distanzrohre mit Hülsen (90) versehen sind.

15. Dichtungsstopfen aus elastischem Material, vorzugsweise Gummi, insbesondere für eine Hauseinführung nach einem der Ansprüche 1 bis 14, insbesondere Anspruch 8, umfassend einen Ringkörper (52) mit flexiblen Ringstegen (60) auf der Außenseite, deren Höhe und Dicke so bemessen sind, daß sich die Ringstege (60) beim Einbau dichtend umlegen, und mit Ringwülsten (58) auf der Innenseite, wobei zumindest zwei benachbarte Ringstege so bemessen und angeordnet sind, daß sich der eine Ringsteg beim Einbau im wesentlichen in Kontakt mit dem anderen umlegt.

16. Dichtungsstopfen nach Anspruch 15, dadurch **gekennzeichnet,** daß die Ringwülste (58) und/oder die Ringstege (60) an ihren Außenenden rund sind.

17. Dichtungsstopfen nach Anspruch 15 oder 16, dadurch **gekennzeichnet,** daß an in axialer Richtung äußeren Ende ein Innenflansch (56) vorgesehen ist.

18. Dichtungsstopfen nach einem der Ansprüche 15 bis 17, dadurch **gekennzeichnet,** daß die Höhe der Ringstege (60) von dem in axialer Richtung äußeren Ende nach innen abnimmt und/oder die Zwischenräume zwischen den Ringstegen geringer als die Dicke der Ringstege sind.
